# EUROPÄISCHE PATENTANMELDUNG

(11) **EP 2 161 554 A1**
(43) Veröffentlichungstag der Anmeldung: **10.03.2010**
(21) Anmeldenummer: 09011439.8
(22) Anmeldetag: 07.09.2009
(51) Int. Cl.: G01J 3/02, G01J 3/04, G01J 3/10, G01J 3/18, G01N 21/89, B41F 33/00

(54) **Vorrichtung zur Messung einer Spektralverteilung eines mit einer Druckeinrichtung hergestellten transluzenten Druckerzeugnisses**

(30) Priorität: 05.09.2008 DE 102008045987
(71) Anmelder: Theta System Elektronik GmbH, 82194 Gröbenzell (DE)
(72) Erfinder: Tatarczyk, Christina, 82194 Gröbenzell (DE); Tatarczyk, Joachim, 82194 Gröbenzell (DE)
(74) Vertreter: Elbel, Michaela

(57) **Zusammenfassung**

Eine Vorrichtung (10) zur Messung einer Spektralverteilung eines mit einer Druckeinrichtung hergestellten transluzenten Druckerzeugnisses (12) weist ein Leuchtmittel (20) zum Beleuchten des Druckerzeugnisses (12), ein optoelektronisches Messmittel (32) zum Messen des Transmissionswertes eines Abschnitts des Spektrums des durch das Druckerzeugnis (12) transmittierten Lichtes (26), ein optisches Dispersionsmittel (28) zum Dispergieren der Wellenlängen des transmittierten Lichtes (26) und eine für das Dispersionsmittel (28) maßgebliche Lichteintrittsspaltebene auf, wobei die für das Dispersionsmittel (28) maßgebliche Lichteintrittsspaltebene durch die Oberfläche des zu untersuchenden Druckerzeugnisses (12) geschaffen ist.

## Beschreibung

### Hintergrund der Erfindung

Die Erfindung betrifft eine Vorrichtung zur Messung einer Spektralverteilung eines mit einer Druckeinrichtung hergestellten transluzenten Druckerzeugnisses, welche ein Leuchtmittel zum Beleuchten des Druckerzeugnisses, ein optoelektronisches Messmittel zum Messen des Transmissionswertes mindestens eines Abschnitts des Spektrums des durch das Druckerzeugnis transmittierten Lichtes, ein optisches Dispersionsmittel zum Dispergieren der Wellenlängen des transmittierten Lichtes und eine für das Dispersionsmittel maßgebliche Lichteintrittsspaltebene aufweist.

In der graphischen Industrie sind verschiedene Arten der Qualitätsüberwachung und Steuerung von Druckprozessen bekannt. Eine der dabei verwendeten Messverfahren ist das Farbmessen mittels einer Analyse der Spektralverteilung des von einem Druckerzeugnis remittierten Lichtes.

Bekannt sind Messsysteme zur spektralen Transmissionsmessung von transluzenten Druckerzeugnissen, die eine einzelne Messposition vermessen können.

Aus DE 10 2006 015 375.8-52 ist eine Vorrichtung zur Messung einer Spektralverteilung der Remission eines Abschnitts eines mit einer Druckeinrichtung hergestellten Druckerzeugnisses bekannt.

Spektral messende Vorrichtungen lösen das Spektrum des remittierten Lichtes in Bandbreiten von beispielsweise 20 oder weniger Nanometer auf und bestimmen daraus die dazugehörigen Remissionswerte. Aus den Remissiunswerten können nachfolgend verschiedene Farbkennwerte abgeleitet werden.

### Zugrundeliegende Aufgabe

Der Erfindung liegt die Aufgabe zugrunde, eine Vorrichtung zur Messung einer Spektralverteilung eines Abschnitts eines mit einer Druckeinrichtung hergestellten transluzenten Druckerzeugnisses bei gleicher oder verbesserter Messqualität kostengünstiger und kompakter zu gestalten.

### Erfindungsgemäße Lösung

Diese Aufgabe ist erfindungsgemäß mit einer Vorrichtung zur Messung einer Spektralverteüung gemäß Anspruch 1 gelöst. Die erfindungsgemäße Vorrichtung zur Messung einer Spektralverteilung eines mit einer Druckeinrichtung hergestellten transluzenten Druckerzeugnisses weist ein Leuchtmittel zum Beleuchten des Druckerzeugnisses, ein optoelektronisches Messmittel zum Messen der Transmissionswerte eines Abschnitts des Spektrums des durch das Druckerzeugnis transmittierten Lichtes, ein optisches Dispersionsmittel zum Dispergieren der Wellenlängen des transmittierten Lichtes und eine für das Dispersionsmittel maßgebliche Lichteintrittsspaltebene auf, wobei die für das Dispersionsmittel (28) maßgebliche Lichteintrittsspaltebene durch die Oberfläche des zu untersuchenden transluzenten Druckerzeugnisses geschaffen ist.

Die für das Dispersionsmittel maßgebliche Lichteintrittsspaltebene ist durch die Oberfläche des zu untersuchenden transluzenten Druckerzeugnisses geschaffen, in dem das zu prüfende Druckerzeugnis von der Rückseite her linienförmig bestrahlt wird. Dadurch ist mit der erfindungsgemäßen Lösung eine besonders kostengünstig herzustellende, zu montierende und auch zu wartende Vorrichtung geschaffen. Dies ist gelungen, indem auf das Messmittel einer Vorrichtung zur Messung einer Spektralverteilung ein ca. 1 mm bis ca. 2 mm breiter spalt- bzw. linienförmiger Lichtstrahl geleitet wird, welcher direkt in dieser "Spaltform" durch die zu untersuchenden Oberfläche des transluzenten Druckerzeugnisses transmittiert wird. Die erfindungsgemäße Lösung kann dadurch auf eine aufwendige Optik zwischen dem Erzeugnis und einem Eintrittsspalt eines Spektroskops verzichten.

Die Erfindung basiert unter anderem auf der Erkenntnis, dass es nicht notwendig ist, das zu untersuchende Erzeugnis möglichst großflächig und homogen zu beleuchten, sondern dass eine punktuelle bzw. örtlich begrenzte Beleuchtung erheblich sinnvoller ist, wenn der begrenzt beleuchtete Bereich des Druckerzeugnisses zugleich als Eintrittslichtstrahl für eine erfindungsgemäße Vorrichtung verwendet wird. In der Vorrichtung wird der Eintrittslichtstrahl nachfolgend gebeugt, dispergiert bzw. zerlegt.

Auch auf den Eintrittsspalt bzw. eine Eintrittsspaltblende selbst kann erfindungsgemäß verzichtet werden, nämlich dadurch, dass die Spaltform des für das Dispersionsmittel maßgeblichen Eintrittslichtstrahls durch eine lineare Beleuchtung des zu untersuchenden Druckerzeugnisses geschaffen ist. Die lineare Beleuchtung kann besonders vorteilhaft mittels einer Zylinderlinse bzw. -optik und ggf. einer Blende vor dem Leuchtmittel geschaffen sein. Dabei sind an die Qualität und die Genauigkeit dieser optischen Elemente Zylinderoptik und Blende erheblich geringere Anforderungen zu stellen, als an bekannte Optiken, wie sie zwischen einem zu messendem Erzeugnis und einem Eintrittsspalt bekannter Spektroskope vorgesehen sind.

Als Leuchtmittel für die erfindungsgemäße Vorrichtung wird besonders vorteilhaft mindestens eine Leuchtdiode verwendet, welche bei geringen Kosten und geringem Raumverbrauch eine große Lichtmenge bereitstellt. Die Ebene des vom Leuchtmittel auf das zu messende Erzeugnis gerichteten Beleuchtungslichtstrahls ist vorteilhaft in einem Winkel von 90° zur Oberfläche des Druckerzeugnisses sowie in einem Winkel von 180° zur Sicht- bzw. Betrachtungsrichtung des Messmittels gerichtet. Die Sichtrichtung ist dabei zugleich die Richtung des vom Druckerzeugnis zum Dispersionsmittel transmittierten spaltförmigen Lichtstrahls, welcher dann an diesem Dispersionsmittel gebeugt wird.

Erfindungsgemäß bevorzugt wird als Dispersionsmittel ein Beugungsgitter, welches, wie eingangs erwähnt eine hohe Auflösung der Spektralverteilung ermöglicht. Als Gitter wird ein Transmissionsgitter bevorzugt. Alternativ kann auch ein Reflexionsgitter zum Einsatz kommen. Gegebenenfalls können auch Prismen oder Verlaufsfilter verwendet werden, wobei allerdings dem Transmissionsgitter wegen der damit erzielbaren kompakten Bauweise der erfindungsgemäßen Vorrichtung klar der Vortritt gegeben wird.

Die Bevorzugung eines Transmissionsgitters beruht nicht zuletzt auch darauf, dass bei der erfindungsgemäßen Vorrichtung ferner bevorzugt zwischen dem Messmittel und dem Dispersionsmittel lediglich eine Abbildungslinse bzw. -optik angeordnet ist. Auf aufwendige Prismensysteme, wie sie in diesem Bereich bei bekannten Spektroskopen vorgesehen sind, wird erfindungsgemäß hingegen bewusst verzichtet.

Möglich ist dieser Verzicht, weil als Messmittel erfindungsgemäß insbesondere ein Sensor verwendet wird, welcher eine Vielzahl Photoelemente aufweist und entsprechend eine hohe Auflösung bieten kann. Besonders bevorzugt wird als Messmittel ein kostengünstiger Flächensensor verwendet, wie er aus herkömmlichen digitalen Kameras für Bildaufnahmen bekannt ist.

Die erfindungsgemäße Vorrichtung kann ferner insbesondere dadurch besonders kompakt und ohne aufwendige Prismen-Optiken im Strahlengang gestaltet werden, dass die aus optoelektronischem Messmittel und optischem Dispersionsmittel, sowie insbesondere auch aus der Abbildungsoptik, gebildete Anordnung in ihrer Längsausrichtung schräg zur Richtung des durch das Druckerzeugnis transmittierten und auf das Dispersionsmittel einfallenden Lichtstrahls ausgerichtet ist. Die Anordnung ist insbesondere vorteilhaft in einem Winkel von zwischen ca. 20° und ca. 40° zur Richtung des auf das Dispersionsmittel einfallenden Lichtstrahls schräg gestellt.

Um die erfindungsgemäße Vorrichtung hinsichtlich ihrer Messgenauigkeit weiter zu verbessern, ist ferner über der Oberfläche des Druckerzeugnisses bevorzugt eine Blende zum Zurückhalten von dem durch das Druckerzeugnis transmittierte Fremdlicht vorgesehen.

### Kurzbeschreibung der Zeichnungen

Nachfolgend wird ein Ausführungsbeispiel einer erfindungsgemäßen Vorrichtung anhand der beigefügten schematischen Zeichnungen näher erläutert. Es zeigt:

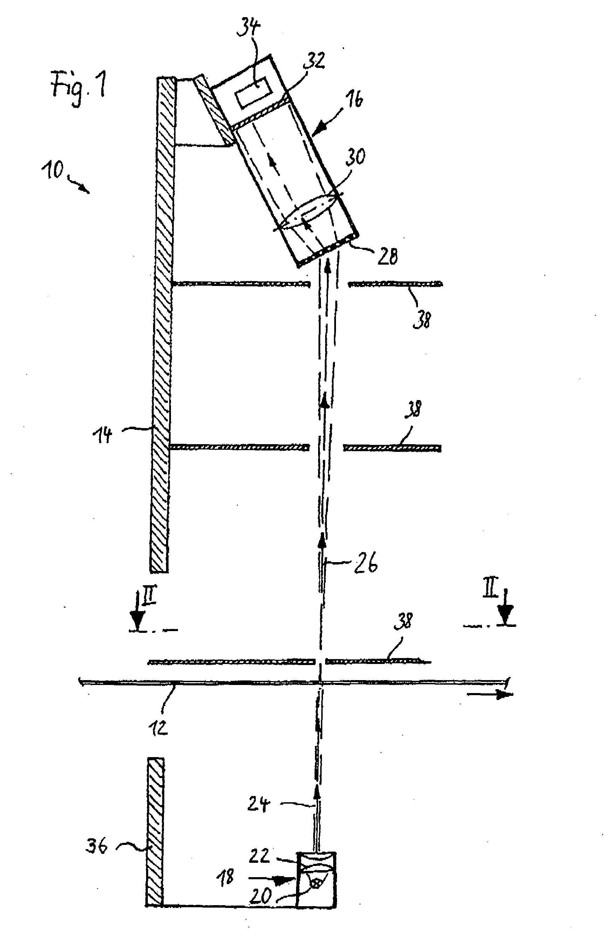

- Fig. 1: einen Längsschnitt eines Ausführungsbeispiels einer erfindungsgemäßen Vorrichtung zur Messung einer Spektralverteilung in Transmission eines Abschnitts eines mit einer Druckeinrichtung hergestellten transluzenten Druckerzeugnisses und

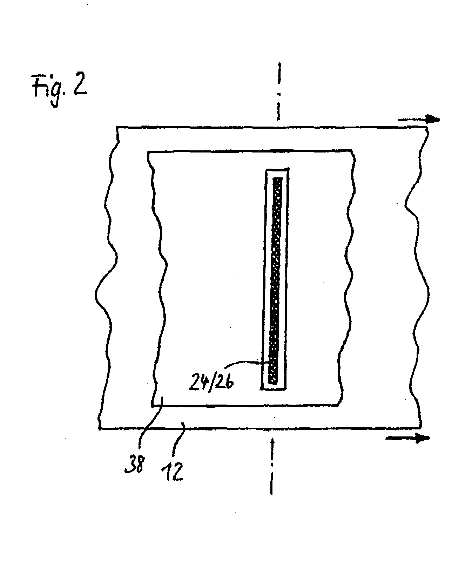

- Fig. 2: den Schnitt II-II in Fig. 1.

### Detaillierte Beschreibung des Ausführungsbeispiels

In den Fig. ist eine Vorrichtung 10 zur Überwachung der Qualität eines mit einer weiter nicht dargestellten Druckeinrichtung erzeugten flächigen transluzenten Druckerzeugnisses 12 dargestellt. Das transluzente Druckerzeugnis 12 ist bahnförmig und wird bezogen auf die Fig. von links nach rechts unter der Vorrichtung 10 hindurchbewegt. Auf dem transluzenten Druckerzeugnis 12 befinden sich aufgedruckte graphische Abbildungen, die hinsichtlich der Qualität ihres Druckbildes zu prüfen sind.

Die Vorrichtung umfasst einen im Wesentlichen senkrecht ausgerichteten stabförmigen Halter 14, an dessen oberem Endabschnitt eine Kameraeinheit 16 gehaltert ist, und einen im Wesentlichen senkrecht ausgerichteten stabförmigen Halter 36, an dem eine Leuchteinheit 18 gehaltert sind.

Die Leuchteinheit 18 umfasst ein Leuchtmittel 20 in Form einer weißes Licht abstrahlenden Leuchtdiode, vor der im Strahlengang eine Zylinderoptik 22 angeordnet ist. Die Zylinderoptik 22 bündelt das von der Leuchtdiode 20 ausgesendete Licht zu einem ca. 1 mm bis 2 mm breiten streifenförmigen bzw. spaltförmigen Beleuchtungslichtstrahl 24, dessen Strahlebene in einem Winkel von 90° direkt auf die zu untersuchende Oberfläche des transluzenten Druckerzeugnisses 12 gerichtet ist.

Von der derart streifenförmig rückseitig beleuchteten Oberfläche des Druckerzeugnisses 12 wird ein ebenfalls streifen- bzw, spaltförmiger Lichtstrahl 26 in Richtung auf die Kameraeinheit 16 transmittiert. Die Hauptstrahlungsrichtung des Lichtstrahls 26 ist dabei etwa in einem Winkel von 90° zur Oberfläche bzw. Ebene des flächigen transluzenten Druckerzeugnisses 12 gerichtet.

Der Lichtstrahl 26 trifft an einem Dispersionsmittel 28 in Gestalt eines Beugungsgitters auf die Kameraeinheit 16. An diesem Dispersionsmittel 28 wird das Spektrum des durch das Druckerzeugnis 12 transmittierten Lichtstrahls 26 zerlegt bzw. gebeugt und es gelangt ein "aufgefächerter" Lichtstrahl 26 weiter zu einer im Innern der Kameraeinheit 16 angeordneten Abbildungsoptik 30. Mit dieser Abbildungsoptik 30 wird der transmittierte und gebeugte Lichtstrahl 26 in seiner Ausrichtung geringfügig korrigiert, damit er ein hinter der Abbildungsoptik 30 befindliches Messmittel 32 in Gestalt eines rechteckigen Flächensensors möglichst weitgehend abdeckt. Das Messmittel 32 ist dabei mit einer Vielzahl einzelner Photoelemente versehen, die einzeln das einfallende Licht hinsichtlich seiner Lichtestärke an eine hinter dem Messmittel 32 angeordnete Auswerteelektronik 36 melden können,

Die Kameraeinheit 16 ist dabei zusammen mit ihrem Dispersionsmittel 28, ihrer Abbildungsoptik 30 und ihrem Messmittel 32 in einem Winkel von ca. 30° derart zur Längsrichtung des transmittierten Lichtstrahls 26 schräg gestellt, dass das vom Dispersionsmittel 28 gebeugte Licht ohne aufwendige optische Korrekturmittel, wie beispielsweise Prismen, nahezu vollflächig auf das Messmittel 32 projiziert wird.

Zur Verbesserung der Messgenauigkeit der gesamten Vorrichtung 10 sind um den Beleuchtungslichtstrahl 24 und den transmittierten Lichtstrahl 26 herum in angepasstem Abstand insgesamt noch drei Blenden 38 in im Wesentlichen paralleler Lage zur Oberfläche des Druckereierzeugnisses 12 angeordnet, mit denen Fremdlicht vom Dispersionsmittel 28 der Kameraeinheit 16 abgehalten wird.

Abschließend sei angemerkt, dass sämtlichen Merkmalen, die in den Anmeldungsunterlagen und insbesondere in den abhängigen Ansprüchen genannt sind, trotz dem vorgenommenen formalen Rückbezug auf einen oder mehrere bestimmte Ansprüche, auch einzeln oder in beliebiger Kombination eigenständiger Schutz zukommen soll.

### Bezugszeichenliste

- 10: Vorrichtung
- 12: Druckerzeugnis
- 14: Halter der Kameraeinheit
- 16: Kameraeinheit
- 18: Leuchteinheit
- 20: Leuchtmittel
- 22: Zylinderoptik
- 24: Beleuchtungslichtstrahl
- 26: transmittierter Lichtstrahl
- 28: Dispersionsmittel
- 30: Abbildungsoptik
- 32: Messmittel
- 34: Elektronik
- 36: Halter der Leuchteinheit
- 38: Blende

## Patentansprüche

1. Vorrichtung (10) zur Messung einer Spektralverteilung eines mit einer Druckeinrichtung hergestellten transluzenten Druckerzeugnisses (12) mit einem Leuchtmittel (20) zum Beleuchten des Druckerzeugnisses (12), einem optoelektronischen Messmittel (32) zum Messen der Transmissionswerte eines Abschnitts des Spektrums des durch das Druckerzeugnis (12) transmittierten Lichtes (26), einem optischen Dispersionsmittel (28) zum Dispergieren der Wellenlängen des transmittierten Lichtes (26) und einer für das Dispersionsmittel (28) maßgeblichen Lichteintrittsspaltebene, wobei die für das Dispersionsmittel (28) maßgebliche Lichteintrittsspaltebene durch die Oberfläche des zu untersuchenden transluzenten Druckerzeugnisses (12) geschaffen ist.

2. Vorrichtung nach Anspruch 1, wobei die Spaltform des für das Dispersionsmittel (28) maßgeblichen transmittierten Lichtes (26) durch eine lineare Beleuchtung (20, 22, 24) des zu untersuchenden Druckerzeugnisses (12) geschaffen ist.

3. Vorrichtung nach Anspruch 1 oder 2, wobei die Beleuchtung (20, 22, 24) des Druckerzeugnisses (12) mittels mindestens einer Leuchtdiode gestaltet ist.

4. Vorrichtung nach einem der Ansprüche 1 bis 3, wobei das Dispersionsmittel (28) mit eines Beugungsgitters gestaltet ist.

5. Vorrichtung nach einem der Ansprüche 1 bis 4, wobei zwischen dem Messmittel (32) und dem Dispersionsmittel (28) lediglich eine Abbildungsoptik (30) angeordnet ist.

6. Vorrichtung nach einem der Ansprüche 1 bis 5, wobei das Messmittel (32) als ein Flächensensor gestaltet ist.

7. Vorrichtung nach einem der Ansprüche 1 bis 6, wobei die aus dem Messmittel (32) und dem Dispersionsmittel (28), sowie insbesondere auch der Abbildungsoptik (30), gebildete Anordnung (16) in ihrer Längsausrichtung schräg zur Richtung des durch das Druckerzeugnis (12) transmittierten und auf das Dispersionsmittel (28) einfallenden Lichtstrahls (26) ausgerichtet ist.

8. Vorrichtung nach einem der Ansprüche 1 bis 7, wobei zwischen der Beleuchtungseinrichtung und der Oberfläche des Druckerzeugnisses (12) eine Blende (38) zum Zurückhalten des durch das Druckerzeugnis (12) transmittierte Fremdlicht vorgesehen ist.

9. Vorrichtung nach einem der Ansprüche 1 bis 8, wobei das Druckerzeugnis (12) flächig, insbesondere bahnförmig, ist.
